# EUROPÄISCHE PATENTSCHRIFT

(11) **EP 1 268 037 B1**
(45) Veröffentlichungstag und Bekanntmachung des Hinweises auf die Patenterteilung: **25.02.2004**
(21) Anmeldenummer: 01925466.3
(22) Anmeldetag: 15.03.2001
(51) Int. Cl.: B01D 46/42, B01D 46/00

(54) **AUFNAHMESILO UND/ODER FILTEREINRICHTUNG FÜR BRENNBARE STAUBGÜTER**
SILO AND/OR FILTER DEVICE FOR INFLAMMABLE DRY BULK FREIGHT
SILO DE RECEPTION ET/OU DISPOSITIF DE FILTRAGE POUR PRODUITS PULVERULENTS COMBUSTIBLES

(30) Priorität: 17.03.2000 DE 10013117
(43) Veröffentlichungstag der Anmeldung: 02.01.2003
(73) Patentinhaber: Thorwesten Vent GmbH, 59269 Beckum (DE)
(72) Erfinder: THORWESTEN, Albert (sen.), 59269 Beckum (DE)
(74) Vertreter: Patentanwälte Meinke, Dabringhaus und Partner
(86) Internationale Anmeldenummer: PCT/EP2001/002942
(87) Internationale Veröffentlichungsnummer: WO 2001/068221

(56) Entgegenhaltungen:
- DE-A- 2 817 746
- US-A- 5 514 195

## Beschreibung

Die Erfindung betrifft ein Aufnahmesilo und/oder eine Filtereinrichtung für brennbare Staubgüter der im Oberbegriff des Anspruches 1 angegebenen Art, wie in der DE-A-28 17 746 beschrieben.

Druckentlastungseinrichtungen in Form von Explosionsklappen oder Berstscheiben werden überall dort eingesetzt, wo brennbare Staubgüter gelagert (Silos, Bunker usw.) oder bewegt (Filteranlagen) werden. Sie sollen bei auftretenden Explosionen den Behälter bzw. das Gehäuse vom Druck entlasten und so vor Beschädigungen schützen, hierzu sei auch auf die US-5 514 195 verwiesen.

Bei derartigen Filtereinrichtungen werden die brennbaren Staubgüter mittels Unterdruck (oder mittels. Überdruck) in den Filterbehälter gesaugt (bzW. gedrückt), die die Staubgüter (z.B. Kohlenstaub) transportierende Luft tritt dann durch die Filterelemente aus, während sich der Staub als Filterkuchen an den Filterelementen ablagert und von Zeit zu Zeit mittels Freiblaseinrichtungen od. dgl. von den Filterelementen entfernt und in ein Silo gefördert wird. Bei großen Filtereinrichtungen mit Explosionsschutz bestehen die Filtereinrichtungen üblicherweise aus Filterbehältern bzw. Gehäusen in rechteckiger Form, welche sowohl im Dachbereich als auch seitlich angrenzend an die Filterelemente mit Explosionsklappen ausgerüstet sind. Diese bekannten Filtereinrichtungen sind sehr aufwendig, da sie zum einen aufgrund der schlechten Druckstoßfestigkeit von rechteckigen Gehäusen entsprechender Gehäusewandstärken bedürfen und zum anderen eine Mehrzahl von Explosionsklappen erfordern.

Ferner sind auch Filtereinrichtungen bekannt, welche aus einem Behälter mit rundem Querschnitt bestehen, der direkt auf einem Bunker angeordnet ist (Bunkeraufsatzfilter). Diese Behälter sind jedoch nicht selbst mit Druckentlastungseinrichtungen ausgerüstet, sondern die darunter befindlichen Bunker. Alternativ können solche Behälter auch für den maximalen Druck ausgelegt sein und keine Entlastungseinrichtung aufweisen.

Aufgabe der Erfindung ist es deshalb, ein gattungsgemäßes Silo bzw. eine Filtereinrichtung so weiterzuentwickeln, daß sie mit möglichst geringem konstruktiven Aufwand geeignet ist, die entstehenden mechanischen Beanspruchungen aufzunehmen und gleichzeitig eine sichere Druckentlastung zu gewährleisten.

Diese Aufgabe wird bei einer Filtereinrichtung der eingangs bezeichneten Art erfindungsgemäß dadurch gelöst, daß wenigstens ein Druckentlastungselement im Behälterdeckel, insbesondere im mittleren Bereich, angeordnet ist, wobei der Behälterraum unterhalb des wenigstens einen Druckentlastungselementes von einem rohrförmigen, im wesentlichen vertikal im Behälter angeordneten Element begrenzt ist, in welches die rohrförmige Staubgutzuführung mündet.

Ein erfindungsgemäßes Silo bzw. eine derartige Filtereinrichtung läßt sich mit wesentlich geringerem konstruktiven und damit Kostenaufwand realisieren, da zunächst aufgrund des runden Behälterquerschnittes und der dadurch bedingten günstigen Behälterfestigkeitseigenschaften nur relativ geringe Behälterwandstärken erforderlich sind.

Darüber hinaus ist die Filtereinrichtung mit einer wirkungsvollen, aber ebenfalls wenig aufwendigen Druckentlastungseinrichtung versehen, da, anders als bei bekannten Filtereinrichtungen vergleichbarer Kapazität mit rechteckiger Form das wenigstens eine Druckentlastungselement nur im Deckelbereich des Behälters angeordnet werden muß, jedoch zusätzliche Druckentlastungseinrichtungen an den Behälterseitenwandungen entbehrlich sind. Dies ist deshalb möglich, weil das Staubgut in der beanspruchten speziellen Weise zugeführt wird, so daß bei etwaigen Druckstößen das Staubgut gezielt direkt in Richtung zum wenigstens einen Druckentlastungselement geführt wird und nicht mehr in den Bereich der Filterelemente gelangt, so daß eine sichere Entkoppelung gewährleistet ist.

Um den Behälterraum optimal auszunutzen, ist vorteilhaft vorgesehen, daß die Filterelemente im Bereich zwischen dem rohrförmigen Element und der Behälteraußenwandung angeordnet sind.

Ferner ist vorteilhaft vorgesehen, daß der Behälter unterhalb des die Filterelemente aufnehmenden Bereiches trichterförmig ausgebildet ist. Das als Filterkuchen abgelöste Staubgut kann dann besonders einfach aus der Filtereinrichtung abgeführt und z.B. einem nachgeordneten Silo zugeleitet werden.

Bei dieser Gestaltung ist bevorzugt vorgesehen, daß die rohrförmige Staubgutzuführung geneigt gegenüber der Vertikalen im trichterförmigen Bereich in den Behälter eintritt und in vertikaler Lage mittig in das rohrförmige Element mündet.

Um den Behälterdeckel möglichst material- und gewichtssparend und trotzdem ausreichend druckstoßfest auszubilden, ist besonders vorteilhaft vorgesehen, daß der Behälterdekkel in Sandwichbauweise ausgebildet ist.

Dazu ist in ganz besonders vorteilhafter Ausgestaltung vorgesehen, daß der Behälterdeckel eine obere und eine untere Deckellage aufweist, welche mit sich nach oben verjüngenden trichterförmigen Deckelelementen verbunden sind, wobei die obere und die untere Deckellage im Bereich der trichterförmigen Deckelelemente Aussparungen aufweisen, entlang derer die Deckellagen umlaufend mit den Deckelelementen verbunden sind.

Diese Ausgestaltung des Behälterdeckels bietet ganz besondere Vorteile. Aufgrund der Sandwichbauweise treten nur an der unteren Deckellage des Druckbehälters Druckspannungen auf, während die obere Deckellage auf Zug beansprucht wird, was relativ unkritisch ist. Die untere Deckellage, die aufgrund der Druckbeanspruchung entsprechend dick dimensioniert werden muß, weist jedoch nur eine sehr kleine Fläche auf, da sie von der Mehrzahl der trichterförmigen Deckelelemente durchdrungen ist, d.h. lediglich der Bereich zwischen den unteren Enden der zum Behälterinneren hin offenen trichterförmigen Deckelelemente bildet die untere Deckellage und ist mit relativ kleinen ausreichend dimensionierten Blechen od. dgl. ausgerüstet. Für die obere Deckellage können aufgrund der reinen Zugbeanspruchung dagegen Bleche mit wesentlich geringerer Wandstärke verwendet werden.

Ferner ist vorteilhaft vorgesehen, daß sich die trichterförmigen Deckelelemente bis außerhalb der oberen Deckellage erstrecken.

Eine abgewandelte Ausführung besteht erfindungsgemäß darin, daß im Zentrum des Deckels bei derartigen Silo- bzw. Filtereinrichtungen ein sich nach außen und oben verjüngender, kegelstumpfförmiger, die obere Deckellage überragender Bereich vorgesehen ist, der von konzentrischen, schräggestellten Blechbändern derart umgeben ist, daß sich querschnittlich im Deckel ein Dreieck-Fachwerk als Sandwich ausbildet.

Diese schräggestellten, einzelnen, sandwichbildenden, Kegelstümpfe ersetzenden Blechbänder ergeben eine optimale Krafteinleitung bei einer möglichen Explosion innerhalb des Behältnisses. So heben sich die nach außen gegen die schräggestellten Blechbänder gerichteten Kräfte aufgrund der umlaufenden Kreisform gegeneinander ab, die gegenläufig gerichteten, umlaufenden, schräggestellten Blechbänder können die auf sie ausgeübten Kräfte in gleicher Weise optimal weiterleiten und kompensieren.

Weitere erfindungsgemäße Ausgestaltungen bestehen darin, daß der Deckel mit einer senkrechten, geraden Außenrandwand ausgerüstet ist und/oder daß an der Außenrandwand ein die obere Deckellage nach außen verlängerndes, umlaufendes, ein rechtwinkliges Dreieck bildendes Blechband befestigt ist.

Mit der letzteren Gestaltung läßt sich die Sandwichbauweise praktisch über den Silo- bzw. Filterrand hinaus fortsetzen, was insbesondere dann zweckmäßig ist, wenn die Einrichtungen vergleichsweise klein im Durchmesser sind und gleichwohl umlaufende Begehungsränder oder Arbeitsbühnen geschaffen werden sollen, die dann im Deckelbereich durch Verbreiterung bereitgestellt werden können.

Der zentrische, von den Blechbändern umgebene Kegelstumpf kann beispielsweise die oben erwähnte Explosionsklappe tragen, er kann aber auch bei anderer Gestaltung, etwa einer etwas anderen Silogestaltung, einen Filterkopf tragen. Ist letzteres der Fall, kann es zweckmäßig sein, die Explosionsklappe exzentrisch am Deckel anzuordnen, wie dies die Erfindung in weiterer Ausgestaltung ebenfalls vorsieht.

Weitere Merkmale, Einzelheiten und Vorteile der Erfindung ergeben sich aufgrund der nachfolgenden Beschreibung sowie anhand der Zeichnung. Diese zeigt in
- Fig. 1: eine Seitenansicht einer erfindungsgemäßen Filtereinrichtung,
- Fig. 2: eine Ansicht von oben auf die Filtereinrichtung,
- Fig. 3: einen Schnitt durch die Filtereinrichtung im Niveau der Filterelemente,
- Fig. 4: ein vergrößertes Detail der Lochbodenbefestigung,
- Fig. 5: eine räumliche Darstellung als "Drahtmodell" des Silo-/Filterdeckels,
- Fig. 6: eine räumliche Darstellung mit Aufsicht von oben auf den Silo-/Filterdeckel,
- Fig. 7: eine räumliche Unteransicht auf den Silo-/Filterdeckel,
- Fig. 8: eine abgewandelte Ausführungsform des Filterdeckels in Seitenansicht sowie in
- Fig. 9: den Filterdeckel gemäß Fig. 8 in Unteransicht.

Eine erfindungsgemäße Filtereinrichtung für brennbare Staubgüter ist in der Zeichnung allgemein mit 1 bezeichnet. Diese Filtereinrichtung 1 weist zunächst einen Behälter 2 mit einem runden Querschnitt auf. Der Durchmesser eines solchen Behälters 2 kann beispielsweise in der Größenordnung von 5 bis 10 m liegen.

Im zylindrischen Behälter 2 ist zentral ein vertikal erstrecktes rohrförmiges Element 3 angeordnet, welches oberseitig am allgemein mit 4 bezeichneten Behälterdeckel befestigt ist. An einem (Loch-)Boden(ring) 5 sind im Bereich zwischen dem rohrförmigen Element 3 und der Behälteraußenwandung eine Vielzahl von hängend angeordneten rohrförmigen Filterelementen 6 befestigt, wie diese für sich betrachtet bekannt sind.

Unterhalb der Filterelemente 6 ist der Behälter 2 trichterförmig ausgebildet, dieser trichterförmige Bereich ist mit dem Bezugszeichen 2a bezeichnet. Das untere Ende des trichterförmigen Bereiches 2a bildet eine Staubgutabführung 7, auf deren Ausgestaltung es im einzelnen nicht ankommt, das Staubgut kann von hier beispielsweise einem Silo od. dgl. zugeführt werden.

Zur Zuführung des Staubgutes in die Filtereinrichtung 1, vorzugsweise mittels Luft (Unterdruckansaugung), ist eine rohrförmige Staubgutzuführung vorgesehen, die mittig in das rohrförmige Element 3 im Behälter 2 mündet. Diese rohrförmige Staubgutzuführung weist einen ersten Bereich 8 auf, welcher geneigt gegenüber der Vertikalen im trichterförmigen Bereich 2a des Behälters 2 in diesen eintritt und die Behälterwandung durchdringt und sich in einen vertikal erstreckten Bereich 9 fortsetzt, der mittig in den rohrförmigen Bereich 3 geführt ist.

Aufgrund dieser Gestaltung tritt das unter Unterdruck zugeführte Staubgut durch die Staubgutzuführung 8, 9 in Richtung der Pfeile 10 zunächst aus dem Ende der Staubgutzuführung 9 in das rohrförmige Element 3 ein und wird dort in Richtung der Pfeile 10 umgelenkt, da das rohrförmige Element 3 seitlich und nach oben verschlossen ist. Die weitere Strömung ergibt sich dann in Richtung der Pfeile 11 zu den Filterelementen 6, wo sich das Staubgut als Filterkuchen an den Filteraußenseiten ansammelt, während die transportierende Luft in die Filterelemente 6 eintritt und in üblicher Weise abgeführt wird.

Um das Produkt, also das Staubgut, als Filterkuchen von den Filterelementen 6 abzulösen, sind in an sich bekannter Weise an der Behälteraußenseite über den Umfang des Behälters 2 verteilt eine Mehrzahl von Druckluftzuführungen 12 vorgesehen, mit denen es möglich ist, den Filterkuchen von den Filterelementen 6 abzulösen, worauf dieser dann in den trichterförmigen Bereich 2a des Behälters austritt und als Produkt durch die Staubgutabführung 7 ausgeleitet werden kann. Außenseitig kann am Behälter 2 im Bereich dieser Druckluftzuführungen 12 auch eine umlaufende Arbeitsbühne 13 vorgesehen sein.

Wesentlich für die erfindungsgemäße Filtereinrichtung 1 ist darüber hinaus die Gestaltung des Behälterdeckels 4, der ganz besonders bevorzugt in Sandwichbauweise ausgebildet ist. Dazu weist der Behälterdeckel 4 eine obere Deckellage 14 und eine untere Deckellage 15 auf, welche mit sich nach oben verjüngenden trichterförmigen Deckelelementen 16 miteinander verbunden sind. Dabei bilden die oberseitig verschlossenen (Bezugszeichen 16a) Deckelelemente 16 einen Teil der Deckelwandung, d.h. die obere und die untere Dekkellage 14, 15 weisen Aussparungen auf, entlang derer die Deckellagen 14, 15 umlaufend mit den trichterförmigen Dekkelelementen 16 verbunden sind.

Da die trichterförmigen Deckelelemente 16 sich nach oben verjüngen, ist ihr unterer Bereich flächenmäßig sehr groß, d.h. die Aussparungen 15a der unteren Deckellage 15 nehmen einen Großteil der Fläche der Deckellage 15 ein, so daß die eigentliche Deckellage 15 nur eine kleine Fläche zwischen den trichterförmigen Deckelelementen 16 einnimmt. Da die untere Deckellage 15 im wesentlichen Druckbeanspruchungen aufnehmen kann und deshalb eine erhebliche Wandstärke aufweisen muß, ist diese Gestaltung besonders vorteilhaft, da die untere Deckellage 15 nur eine kleine Fläche aufweist, d.h. nur eine kleine Fläche zwischen den unteren Enden der Deckelelemente 16 muß entsprechend ausreichend dimensioniert werden, was auf einfache Weise beispielsweise aus kleinen Blechstücken geschehen kann, die mit dem unteren Rand der Deckelelemente 16 verschweißt werden können.

Die obere Deckellage 14 weist zwar zwischen den Ausnehmungen für die Deckelelemente 16 eine größere Fläche als die untere Deckellage 15 auf, sie kann jedoch aus Blechen geringerer Wandstärke dimensioniert werden, da sie im wesentlichen nur Zugbeanspruchungen aufnehmen können muß. Es steht somit eine besonders vorteilhafte Deckelausgestaltung der Filtereinrichtung 1 zur Verfügung, die aufgrund ihrer Sandwichbauweise mit den zusätzlichen trichterförmigen Dekkelelementen 15 bei hervorragenden Festigkeitseigenschaften nur ein geringes Gewicht und einen relativ geringen Materialeinsatz erfordert. Oberseitig ist der Behälterdeckel von einer Schutzumwehrung 18 umgeben.

Von weiterem wesentlichen Vorteil dieser Deckelgestaltung des Behälters 2 ist, daß in gleicher Weise im Zentrum des Behälters 2 oberhalb des rohrförmigen Elementes 3 eine, vorzugsweise zwei oder mehr Druckentlastungselemente in Form von Explosionsklappen angeordnet werden können, diese sind mit 17 bezeichnet und in die Sandwichdachkonstruktion des Behälterdeckels 4 integriert. Diese Explosionsklappen 17 sind lediglich im Bereich des rohrförmigen Elementes 3 notwendig, und zwar aufgrund der Gestaltung der Staubgutzuführung 8, 9 und des rohrförmigen Elementes 3. Tritt nämlich ein Druck- und/oder Flammenstoß im Staubgut ein, so wird aufgrund der Gestaltung dieser ausschließlich in Richtung des Pfeiles 19 aus der Staubgutzuführung 9 austreten und in den Bereich des rohrförmigen Elementes 3 oberhalb eintreten und gelangt dann, ohne in weitere Bereiche des Behälters 2 zu strömen, direkt zu den darüber befindlichen Explosionsklappen 17, die entsprechend öffnen und für die Druckentlastung sorgen.

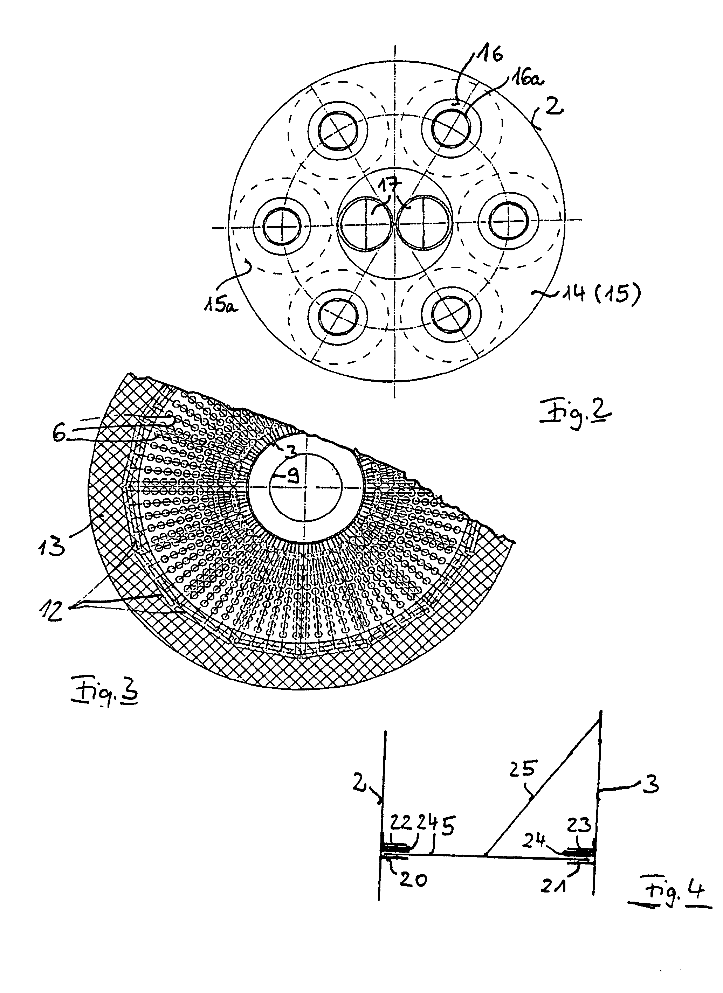

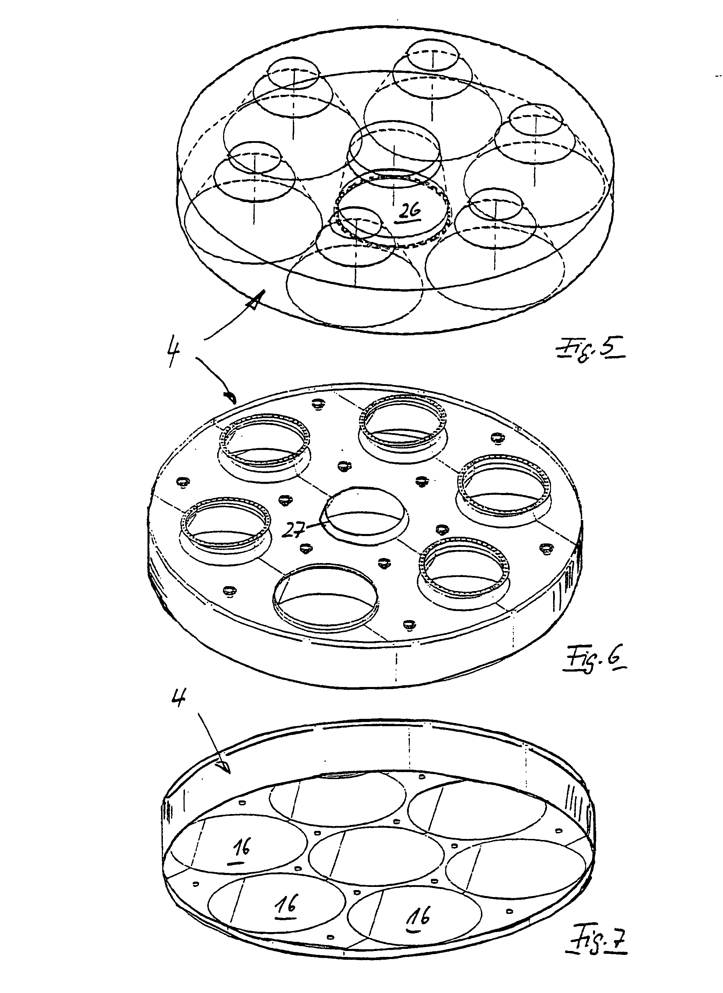

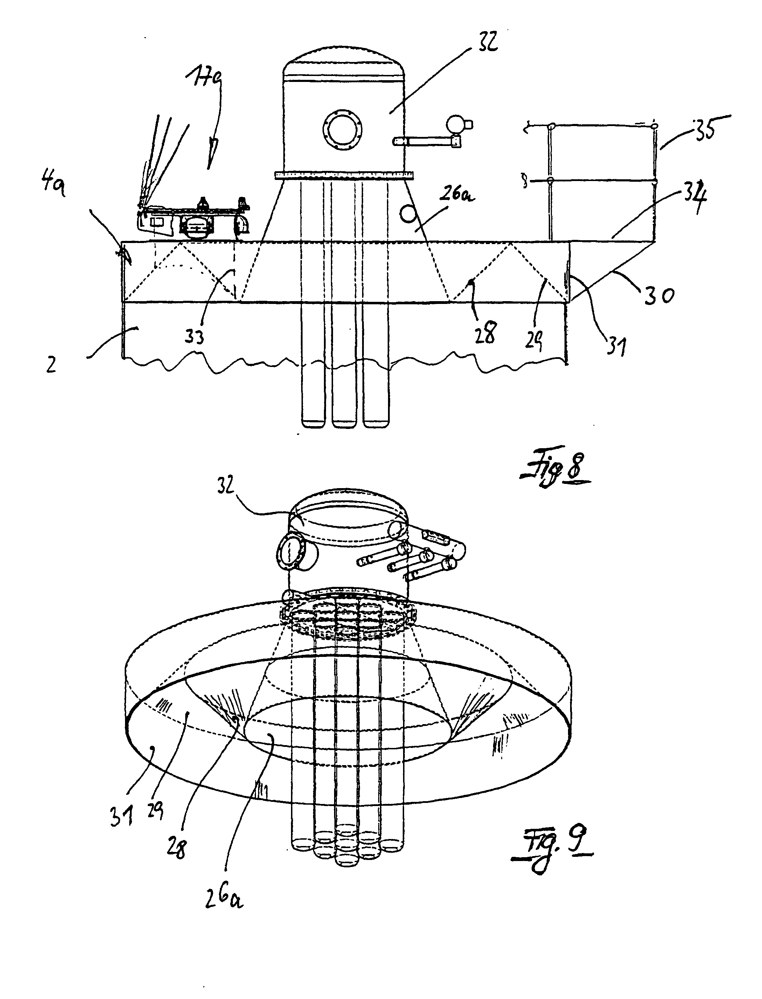

In Fig. 4 ist in vergrößerter Darstellung die Befestigung des Lochbodenringes 5 gezeigt, in den die nicht dargestellten Filterelemente eingehängt sind. Der Boden 5 liegt außen auf einem umlaufenden Kragen 20 der Behälteraußenwandung, welcher gleichzeitig als Aussteifung des Behälters 2 dient, und innen auf einem umlaufenden Kragen 21 des rohrförmigen Elementes 3 auf. Oberhalb dieser Kragen 20, 21 sind an der Behälteraußenwandung sowie dem rohrförmigen Element 3 beabstandet voneinander Befestigungswinkel 22, 23 angeordnet. Bei auf den Kragen 20, 21 aufliegendem Boden 5 kann dieser durch Eintreiben von Holzkeilen 24 zwischen den Befestigungswinkeln 22, 23 und dem Boden 5 befestigt werden. Zusätlich ist der Boden 5 in seinem mittleren Bereich an flexiblen Seilen 25 aufgehängt, um ein Durchhängen zu vermeiden. Diese Seile 25 sind am anderen Ende am rohrförmigen Element 3 befestigt. Tritt im Behälter 2 eine Druckwelle nach oben auf, kann sich der Boden 5 leicht aus seiner Verankerung lösen und nach oben abheben, ohne daß größere Beschädigungen entstehen.

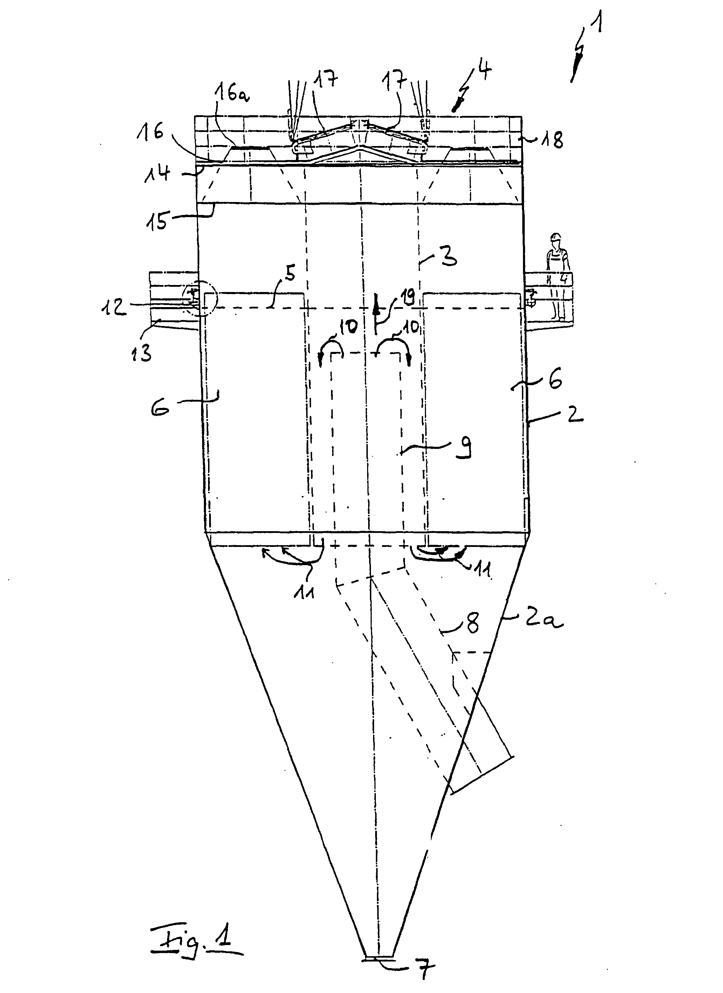

Entsprechende Deckelgestaltungen gemäß vorangegangener Beschreibung ergeben sich auch aus den Fig. 5 bis 7, wobei die Fig. 5 eine sogenannte Drahtdarstellung eines Deckels im wesentlichen gemäß Aufsicht Fig. 2 ist, allerdings mit einem zentrischen, nach oben ausgestülpten zylinderstumpfförmigen Ansatz 26, der auf dem entsprechenden Montagekragen 27 (Fig. 6) angeordnet ist.

Eine etwas andere, abgewandelte Ausführung des Behälterdekkels zeigen die Fig. 8 und 9, hier ist der Behälterdeckel allgemein mit 4a bezeichnet. Der wesentliche Unterschied gegenüber der Ausführungsform gemäß Fig. 2 und 5 bis 7 besteht darin, daß hier der Deckel 4a des Behälters 2 seine Sandwichbauweise dadurch erreicht, daß um den mit 26a bezeichneten zentrischen Zylinderkegel konzentrische, schräggestellte, umlaufende Bleche 28 und 29, ggf. ein den Deckel 4a nach außen verbreiterndes weiteres umlaufendes Blechband 30 vorgesehen sind, die ggf. noch mit Verstärkungselementen versehen sein können, wobei der obere Außenrand des Deckels 4a vom umlaufenden Vertikalrandblech 31 gebildet wird.

Erkennbar kann der zentrische Kegelstumpf 26a einen Filter bzw. eine Filterkerze, allgemein mit 32 bezeichnet, tragen oder auch eine oder mehrere Explosionsklappen, wobei im dargestellten Beispiel gemäß Fig. 8 die mit 17a bezeichnete Explosionsklappe exzentrisch auf einem Rohr 33 am Deckel 4a angeordnet ist.

Die umlaufenden Bleche 28 bis 30 bilden um den Zentralkegelstumpf 26a querschnittlich einen fachwerkartigen Aufbau, aber ohne Unterzug bzw. ohne untere Deckellage 15, woraus sich ergibt, daß etwa auf die Bleche 29 aufgebrachte Drükke, etwa bei einer inneren Explosion im Silo 2 sich diese wegen der umlaufenden Form der Bleche oder der umlaufenden Anordnung gegenseitig aufheben. Wird ein Umgang für Personen benötigt und ist die Deckelfläche zu klein, kann der Deckel nach außen vergrößert werden, dies geschieht wiederum mit einem umlaufenden Blech 30, das einen Teilbereich des Oberbleches aufnimmt. Dieser Bereich ist in Fig. 8 mit 34 bezeichnet, ein Handlauf oder ein umlaufendes Gitter ist angedeutet und trägt das Bezugszeichen 35.

Natürlich sind die beschriebenen Ausführungsbeispiele der Erfindung noch in vielfacher Hinsicht abzuändern, ohne den Grundgedanken zu verlassen. So können beispielsweise beim Ausführungsbeispiel der Erfindung gemäß Fig. 8 und 9 noch weitere umlaufende Bleche vorgesehen sein u. dgl. mehr.

## Patentansprüche

1. Aufnahmesilo und/oder Filtereinrichtung für brennbare Staubgüter mit einer im wesentlichen zylindrischen Wand, einem Deckel, einer Staubgutzu- und -abführung sowie einem bei vorgegebener Druckerhöhung im Behälter öffnenden Druckentlastungselement und mit dem Behälter zugeordneten Filterelementen,
**dadurch gekennzeichnet,**
**daß** wenigstens ein Druckentlastungselement (17) im Behälterdeckel (4) angeordnet ist, wobei der Behälterraum unterhalb des wenigstens einen Druckentlastungselementes (17) von einem rohrförmigen, im wesentlichen vertikal im Behälter (2) angeordneten Element (3) begrenzt ist, in welches die rohrförmige Staubgutzuführung (9) mündet.

2. Silo- bzw. Filtereinrichtung nach Anspruch 1,
**dadurch gekennzeichnet,**
**daß** die Filterelemente (6) im Bereich zwischen dem rohrförmigen Element (3) und der Behälteraußenwandung angeordnet sind.

3. Silo- bzw. Filtereinrichtung nach Anspruch 1 oder 2,
**dadurch gekennzeichnet,**
**daß** das Druckentlastungselement (17) im Behälterdeckel (4) im mittleren Bereich angeordnet ist.

4. Silo- bzw. Filtereinrichtung nach einem der vorangehenden Ansprüche,
**dadurch gekennzeichnet,**
**daß** der Behälter (2) unterhalb des die Filterelemente aufnehmenden Bereiches trichterförmig (2a) ausgebildet ist.

5. Silo- bzw. Filtereinrichtung nach Anspruch 4,
**dadurch gekennzeichnet,**
**daß** die rohrförmige Staubgutzuführung (8,9) geneigt gegenüber der Vertikalen im trichterförmigen Bereich (2a) in den Behälter (2) eintritt und in vertikaler Lage mittig in das rohrförmige Element (3) mündet.

6. Silo- bzw. Filtereinrichtung nach einem der vorangehenden Ansprüche,
**dadurch gekennzeichnet,**
**daß** ein Behälterdeckel (4,4') in Sandwichbauweise vorgesehen ist, wobei der Behälterdeckel (4) eine obere und eine untere Deckellage (14,15) aufweist, welche mit sich nach oben verjüngenden trichterförmigen Deckelelementen (16) oder umlaufenden Schrägblechen (28,29) verbunden sind, wobei ggf. die obere und die untere Deckellage (14,15) Aussparungen aufweisen, entlang derer die Deckellagen (14,15) umlaufend mit den Deckelelementen (16) verbunden sind.

7. Silo- bzw. Filtereinrichtung nach Anspruch 6,
**dadurch gekennzeichnet,**
**daß** sich die trichterförmigen Deckelelemente (16) bis außerhalb der oberen Deckellage (14) erstrecken.

8. Silo- bzw. Filtereinrichtung nach einem der vorangehenden Ansprüche,
**dadurch gekennzeichnet,**
**daß** im Zentrum des Deckels ein sich nach außen und oben verjüngender, kegelstumpfförmiger, die obere Deckellage überragender Bereich (26a) vorgesehen ist, der von konzentrischen schräggestellten Blechbändern (28,29) derart umgeben ist, daß sich querschnittlich im Deckel ein Dreieck-Fachwerk ausbildet.

9. Silo- bzw. Filtereinrichtung insbesondere nach Anspruch 7,
**dadurch gekennzeichnet,**
**daß** der Deckel mit einer senkrechten, geraden Außenrandwand (31) ausgerüstet ist und/oder daß an der Außenrandwand (31) ein die obere Deckellage nach außen verlängerndes, umlaufendes, ein rechtwinkliges Dreieck bildendes Blechband befestigt ist.

10. Silo- bzw. Filtereinrichtung nach einem der vorangehenden Ansprüche,
**dadurch gekennzeichnet,**
**daß** der zentrische Kegelstumpf eine Explosionsklappe oder einen Filterkopf trägt.

## Claims

1. A receiving silo and/or filter device for inflammable dust materials comprising a substantially cylindrical wall, a cover, a dust material feed and discharge means, and a pressure relief element which opens at a predetermined increase in pressure in the container, and filter elements associated with the container, **characterised in that** at least one pressure relief element (17) is arranged in the container cover (4), wherein the container space beneath the at least one pressure relief element (17) is defined by a tubular element (3) which is arranged substantially vertically in the container (2) and into which the tubular dust material feed means (9) opens.

2. A silo or filter device according to claim 1 **characterised in that** the filter elements (6) are arranged in the region between the tubular element (3) and the outside wall of the container.

3. A silo or filter device according to claim 1 or claim 2 **characterised in that** the pressure relief element (17) is arranged in the container cover (4) in the central region.

4. A silo or filter device according to one of the preceding claims **characterised in that** the container (2) is of a funnel-shaped configuration (2a) below the region accommodating the filter elements.

5. A silo or filter device according to claim 4 **characterised in that** the tubular dust material feed means (8, 9) passes into the container (2) inclinedly with respect to the vertical in the funnel-shaped region (2a) and opens in a vertical position centrally into the tubular element (3).

6. A silo or filter device according to one of the preceding claims **characterised in that** there is provided a container cover (4, 4') of a sandwich structure, wherein the container cover (4) has an upper and a lower cover layer (14, 15) which are connected with upwardly tapering funnel-shaped cover elements (16) or peripherally extending inclined plates (28, 29), wherein optionally the upper and the lower cover layer (14, 15) have openings, along which the cover layers (14, 15) are connected peripherally to the cover elements (16).

7. A silo or filter device according to claim 6 **characterised in that** the funnel-shaped cover elements (16) extend to outside the upper cover layer (14).

8. A silo or filter device according to one of the preceding claims **characterised in that** provided in the center of the cover is an outwardly and upwardly tapering, frustoconical region (26a) which projects beyond the upper cover layer and which is surrounded by concentric inclined sheet metal strips (28, 29) in such a way that a triangular lattice is formed in cross-section in the cover.

9. A silo or filter device in particular according to claim 7 **characterised in that** the cover is provided with a perpendicular straight outer edge wall (31) and/or that fixed to the outer edge wall (31) is a peripherally extending sheet metal strip which prolongs the upper cover layer outwardly and which forms a right-angled triangle.

10. A silo or filter device according to one of the preceding claims **characterised in that** the central truncated cone carries an explosion flap or a filter head.

## Revendications

1. Silo de réception ou dispositif de filtre pour produits pulvérulents combustibles comportant une paroi essentiellement cylindrique, un couvercle, une arrivée et une évacuation pour le produit pulvérulent, ainsi qu'un élément de détente de pression qui s'ouvre lors d'un accroissement prédéterminé de pression dans le récipient, et comportant des éléments de filtre associés au récipient, **caractérisé en ce qu'**au moins un élément de détente de pression (17) est disposé dans le couvercle (4) du récipient, l'espace du récipient au-dessous du au moins un élément de détente de pression (17) étant limité par un élément (3) de forme tubulaire, disposé essentiellement verticalement dans le récipient (2) et dans lequel débouche l'arrivée de forme tubulaire (9) pour le produit pulvérulent.

2. Dispositif de silo ou de filtre selon la revendication 1, **caractérisé en ce que** les éléments de filtre (6) sont disposés dans la zone comprise entre l'élément de forme tubulaire (3) et la partie extérieure du récipient.

3. Dispositif de silo ou de filtre selon la revendication 1 ou 2, **caractérisé en ce que** l'élément de détente de pression (17) est disposé dans la zone centrale, dans le couvercle (4) du récipient.

4. Dispositif de silo ou de filtre selon l'une des revendications précédentes, **caractérisé en ce que** le récipient (2) est agencé en forme d'entonnoir (2a) au-dessous de la zone recevant les éléments de filtre.

5. Dispositif de silo ou de filtre selon la revendication 4, **caractérisé en ce que** l'arrivée de forme tubulaire (8, 9) pour le produit pulvérulent pénètre dans le récipient (2) dans une position inclinée par rapport à la verticale dans la zone en forme d'entonnoir (2a) et débouche d'une manière centrée, en position verticale, dans l'élément de forme tubulaire (3).

6. Dispositif de silo ou de filtre selon l'une des revendications précédentes, **caractérisé en ce qu'**il est prévu un couvercle (4, 4') du récipient selon une structure sandwich, le couvercle (4) du récipient possède des couches supérieure et inférieure (14, 15), qui sont reliées à des éléments de couvercle (16) en forme d'entonnoir, qui se rétrécissent vers le haut, ou à des tôles obliques périphériques (28, 29), les couches supérieure et inférieure (14, 15) du couvercle comportant éventuellement des évidements, le long desquels les couches (14, 15) du couvercle sont reliées, circonférentiellement, aux éléments de couvercle (16).

7. Dispositif de silo ou de filtre selon la revendication 6, **caractérisé en ce que** les éléments de couvercle (16) en forme d'entonnoir s'étendent jusqu'à l'extérieur de la couche supérieure (14) du couvercle.

8. Dispositif de silo ou de filtre selon l'une des revendications précédentes, **caractérisé en ce qu'**au centre du couvercle est prévue une partie (26a) de forme tronconique, qui se rétrécit vers l'extérieur et vers le haut, fait saillie au-dessus de la couche supérieure du couvercle et est entourée par des bords de tôle concentriques (28, 29) disposées obliquement de telle sorte qu'un treillis triangulaire en coupe transversale est formé dans le couvercle.

9. Dispositif de silo ou de filtre, principalement selon la revendication 7, **caractérisé en ce que** le couvercle comporte une paroi extérieure rectiligne verti-cale (31) et/ou qu'une bande de tôle périphérique, qui se prolonge vers l'extérieur et forme un triangle rectangle, est fixée sur la paroi marginale extérieure (31).

10. Dispositif de silo ou de filtre selon l'une des revendications précédentes, **caractérisé en ce que** le tronc de cône centré porte un volet anti-explosion ou une tête de filtre.
